# EUROPEAN PATENT SPECIFICATION

(11) **EP 4 073 201 B1**
(45) Date of publication and mention of the grant of the patent: **12.02.2025**
(21) Application number: 19848939.5
(22) Date of filing: 11.12.2019
(51) Int. Cl.: C09K 8/584, C09K 8/588, E21B 43/16

(54) **METHOD FOR EXTRACTING HYDROCARBONS**
VERFAHREN ZUR EXTRAKTION VON KOHLENWASSERSTOFFEN
PROCEDE D'EXTRACTION D'HYDROCARBURES

(43) Date of publication of application: 19.10.2022
(73) Proprietor: TotalEnergies OneTech, 92400 Courbevoie (FR)
(72) Inventor: KLIMENKO, Alexandra, 64018 Pau (FR); MOLINIER, Valérie, 64140 Billère (FR); JOLY, Michèle, 64018 Pau (FR)
(74) Representative: Bandpay & Greuter
(86) International application number: PCT/IB2019/001366
(87) International publication number: WO 2021/116726

(56) References cited:
- WO-A1-2019/133625
- US-A- 4 143 716
- US-A- 4 271 907
- US-A- 4 756 370

## Description

### TECHNICAL FIELD

The present invention relates to a method for extracting hydrocarbons from a subterranean formation in enhanced oil recovery processes.

### TECHNICAL BACKGROUND

Hydrocarbons (such as crude oil) are extracted from a subterranean formation (or reservoir) by means of one or more production wells drilled in the reservoir. Before production begins, the formation, which is a porous medium, is saturated with hydrocarbons.

The initial recovery of hydrocarbons is generally carried out by techniques of *"primary recovery",* in which only the natural forces present in the reservoir are relied upon. In this primary recovery, only part of the hydrocarbons is ejected from the pores by the pressure of the formation. Typically, once the natural forces are exhausted and primary recovery is completed, there is still a large volume of hydrocarbons left in the reservoir.

This phenomenon has led to the development of enhanced oil recovery (EOR) techniques. Many of such EOR techniques rely on the injection of a fluid into the reservoir in order to produce an additional quantity of hydrocarbons.

The fluid used can in particular be an aqueous solution (*"waterflooding process"*), such as brine, which is injected *via* one or more injection wells.

Large amounts of water can also be recovered from the production wells. This is called *"produced water".* The produced water can be *e.g.* discharged to the environment (after treatment) or reinjected into the subterranean formation *via* the injection wells.

A polymer can also be added to the water to increase its viscosity and increase its sweep efficiency in recovering hydrocarbons (*"polymer flooding process"*)*.* In this case, the produced water contains part of the polymer, which can thus be recovered.

However, in a subterranean formation, droplets of hydrocarbons may be *"trapped"* in small cavities, therefore surfactants are often used for the mobilization of residual hydrocarbons, as they tend to generate a sufficiently low hydrocarbon/water interfacial tension which makes it possible to overcome capillary forces and allow hydrocarbons to flow. The efficiency of the surfactant depends on the salinity of the (aqueous) medium used in the subterranean formation and it is therefore advantageous to use an optimal salinity for each surfactant formulation. At this optimal salinity, the interfacial tension between the hydrocarbons and the aqueous phase is minimum, and when this tension reaches ultra-low values (< 10⁻² mN/m) the spontaneous formation of a microemulsion phase in equilibrium with an aqueous phase and a hydrocarbon phase occurs. Such three-phase system is called Winsor III and corresponds to the optimal formulation required for EOR applications.

In addition, in subterranean formations of high salinities (for example higher than 200 g/L) especially at the presence of divalent cations, even surfactants that tolerate and are efficient at high salinities tend to precipitate and/or partition out of the aqueous phase into the oil or emulsion phase. This results in retention of the surfactant within the reservoir matrices and in a loss of efficiency for the surfactant flooding process. As a result, as the surfactant remains retained in the subterranean formation and cannot be efficient downstream in the formation, it becomes necessary to use larger amounts of surfactants in order to improve the hydrocarbon recovery process. However, this results in higher costs of the process. In some cases, the presence of an alkali agent makes it possible to decrease surfactant retention, however the use of such agents necessitates water-softening systems.

Document US 4 157 306 describes the injection of a salinity and hardness adjusted aqueous preflush comprising thickening material into a subterranean, petroleum-containing formation in order to displace the high salinity formation water. The injection of the preflush is followed by the injection of a high-salinity-sensitive surfactant solution.

Document US 4 250 961 relates to the improvement of the efficiency of low tension surfactant flooding program by first determining the upper and lower boundaries for the range of injected water salinities, that, when intermingled with the injected aqueous surfactant slug, will enable the surfactant to resist partitioning into an oil and/or emulsion phase.

Document US 3 500 921 relates to a method for oil recovery from an underground oil-bearing formation by pre-treating the oil-bearing formation zone with sequential slugs.

Document WO 2014/149824 relates to methods for enhancing the amount of oil recovered from subterranean reservoirs or reducing the amount of surfactant needed. This method includes injecting a first alkali-polymer slug through a wellbore into a reservoir, followed by the injection of an alkali-polymer-surfactant slug through the wellbore and then the injection of a second alkali-polymer slug through the wellbore and into the reservoir.

Document WO 2019/133625 discloses a method for the recovery of hydrocarbons from a subterranean formation, comprising injecting a first solution comprising water and a polymer (paragraph [0038]), injecting a second solution comprising water, a polymer and a surfactant (paragraph [0039]) and injecting a third solution comprising water and a polymer (paragraph [0040]). The water used in this document for the preparation of the three solutions has a salinity of 5,000 to 7,000 ppm by weight of TDS (paragraphs [0029] and [0036]).

There is still a need for a method for recovering hydrocarbons that allows an efficient and cost-effective production of hydrocarbons, without using large quantities of chemicals.

### SUMMARY OF THE INVENTION

It is a first object of the invention to provide a method for extracting hydrocarbons from a subterranean formation, comprising:
- injecting a volume of a first solution comprising polymer into the subterranean formation, the first solution having a salinity which is lower than the salinity of water in the subterranean formation;
- injecting a volume of a second solution comprising at least one surfactant and polymer into the subterranean formation, the second solution having substantially the same salinity as the first solution;
- injecting a volume of a third solution comprising polymer into the subterranean formation, the third solution having a salinity which is lower than the salinity of the first and the second solutions;
- collecting hydrocarbons displaced by the injected solutions.

According to some embodiments, the polymer of each of the first, second and third solutions is chosen from hydrolyzed polyacrylamide, partially hydrolyzed polyacrylamide, sulfonated polyacrylamide, poly-N,N-dimethylacrylamide, polyvinyl pyrrolidone, poly(vinylamines), poly(2-acrylamido-2-methyl-1-propanesulfonic acid), biopolymers such as scleroglucans and xanthan gum, hydrophobically-modified associative polymers, co-polymers of polyacrylamide, 2-acrylamido 2-methylpropane sulfonic acid, and N-vinyl pyrrolidone, and preferably is chosen from partially hydrolyzed polyacrylamide and sulfonated polyacrylamide.

According to some embodiments, the water in the subterranean formation has a salinity equal to or higher than 200 g/L, preferably equal to or higher than 210 g/L, and more preferably equal to or higher than 220 g/L.

According to some embodiments, the first solution and the second solution have a salinity from 25 to 200 g/L, and preferably from 40 to 150 g/L.

According to some embodiments, the third solution has a salinity from 0.4 to 70 g/L.

According to some embodiments, the salinity of the third solution is lower than the salinity of the first and second solutions by at least 10 g/L, preferably by at least 20 g/L; preferably by at least 30 g/L; preferably by at least 40 g/L; preferably by at least 50 g/L; preferably by at least 60 g/L; and even more preferably by at least 70 g/L.

According to some embodiments, the first solution has a viscosity from 1 to 100 cP. 1 cP is 1 mPa·s.

According to some embodiments, the second solution has a viscosity from 1 to 100 cP.

According to some embodiments, the third solution has a viscosity from 1 to 100 cP.

According to some embodiments, the first solution has a viscosity which is substantially the same as the viscosity of the second solution.

According to some embodiments, the third solution has a viscosity which is equal to or higher than the viscosity of the first solution and equal to or higher than the viscosity of the second solution.

According to some embodiments, the at least one surfactant has a concentration in the second solution from 0.001 to 10 %, preferably from 0.05 to 5 %, and more preferably from 0.05 to 1.5 % by weight of the total weight of the second solution.

According to some embodiments, the at least one surfactant is chosen from a surfactant of formula (VII):

(VII) R¹⁴-O-(CH₂-CH(CH₃)-O)ₓ-(CH₂-CH₂-O)_{y}-(CH₂)_{w}-X⁻M⁺

wherein:
- R¹⁴ is a linear or branched alkyl group having from 1 to 24 carbon atoms and preferably from 10 to 18 carbon atoms;
- x is a number from 0 to 24, and preferably from 0 to 10;
- y is a number from 0 to 24, and preferably from 2 to 15;
- w is a number from 0 to 2, preferably 2;
- X⁻ is an anionic group selected from the group of -OSO₃-, -R¹⁵-SO₃-, -SO₃-, or -R¹⁵-COO- wherein R¹⁵ is an alkylene group having from 1 to 10 carbon atoms; preferably X⁻ is SO₃-; and
- M⁺ is a hydrogen atom or a cation, preferably chosen from Li⁺, Na⁺ or K⁺; and a surfactant of formula (VIII): 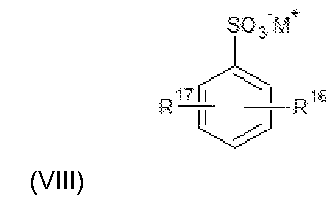
- R¹⁶ and R¹⁷ independently chosen from a hydrogen atom, or a linear or branched alkyl group having radical having from 1 to 24 carbon atoms;
- M⁺ is a hydrogen atom or a cation, preferably chosen from Li⁺, Na⁺ or K⁺;
as well as their mixtures.

According to some embodiments, the second solution comprises two surfactants.

According to some embodiments, each of the first, second and third solutions comprises an aqueous medium which is or derives from produced water, fresh water, sea water or aquifer water.

According to some embodiments, the first solution and/or the second solution and/or the third solution are substantially devoid of alkali agents, and preferably the first solution and the second solution and the third solution are substantially devoid of alkali agents.

According to some embodiments, the subterranean formation has a pore volume, and the sum of the injected volume of the first solution and the injected volume of the second solution and the injected volume of the third solution is equal to or less than the pore volume of the subterranean formation.

According to some embodiments, the sum of the injected volume of the first solution and the injected volume of the second solution is equal to or lower than the injected volume of the third solution.

According to some embodiments, the injection steps are carried out *via* at least one injection well, and the step of collecting hydrocarbons is carried out *via* at least one production well.

The present invention makes it possible to address the need mentioned above. In particular, the invention provides a method for recovering hydrocarbons that allows an efficient and cost-effective production of hydrocarbons, without using large quantities of chemicals.

This is achieved by injecting a first solution comprising polymer into the subterranean formation, followed by the injection of a second solution comprising at least one surfactant and polymer, and the injection of a third solution comprising polymer into the subterranean formation. More particularly, in a subterranean formation having a high salinity (in other words the formation water of the subterranean formation has a high salinity) the injection of the first solution makes it possible to *"pre-treat"* the subterranean formation and reduce its salinity. As a result, when the second solution is injected into the subterranean formation, the surfactant encounters a salinity which may be similar (or identical) to that of its (second) solution. The surfactant is chosen in order to provide a very low interfacial tension at the salinity of the subterranean formation (which is now similar or identical to the salinity of the second solution). This salinity is called optimal salinity and makes it possible to free hydrocarbons trapped in the subterranean formation and also to reduce the adsorption of the surfactant onto the hydrocarbon reservoir. Thus the chromatographic separation (when more than one surfactants are present in the second solution) and retention of the surfactant due to the high salinity of the reservoir is decreased. As a result, smaller amounts of surfactants can be used to achieve an efficient hydrocarbon recovery. Furthermore, the polymer present in all three solutions makes it possible to viscosity the solutions in order to increase the sweeping efficiency in the subterranean formation. The injection of the third solution makes it possible to spread the surfactant (injected with the second solution) in the subterranean formation from the injection well to the production well without using large quantities of surfactants. In addition, as the salinity may be different from one area of the subterranean formation to another, the fact that the third solution has a salinity which is lower than the salinity of the first and of the second solution, ensures that the salinity can be optimal for the surfactant all along the reservoir in order to increase the efficiency of the process. In other words, the fact that the salinity of the third solution is lower than the salinity of the first and second solutions makes it possible, during the progression of the solutions into the hydrocarbon reservoir, to pass the surfactant from the so-called Winsor II state (water in oil emulsion) to a Winsor III state (microemulsion phase in equilibrium with an aqueous phase and a hydrocarbon phase), where the interfacial tensions are very low, and to a Winsor I state (oil in water emulsion) where the surfactant is desorbed from the rock and transported by the third solution.

Advantageously, as the solutions used are preferably devoid (or substantially devoid) of alkali agents, the presence of water-softening systems is not necessary and decreases the cost of the process.

Still advantageously, and in case the second composition comprises more than one surfactant, for example two surfactants, the method according to the invention makes it possible to avoid the separation of the surfactants (as mentioned above). Generally, it is known that a mixture of surfactants can be used instead of a single surfactant in order to improve the efficiency of the process. Therefore, when the mixture is separated in the subterranean formation, this efficiency is lost because the surfactants react separately in the reservoir. It is therefore important to avoid the separation of the surfactants in the reservoir.

Still advantageously, as the sum of the injected volume of the first solution and the injected volume of the second solution and the injected volume of the third solution can be equal to or less than the pore volume of the subterranean formation, the costs related to large amounts of chemicals and water can be reduced. More particularly, as will be detailed below, by *"pore volume"* is meant the swept volume between an injection well and a production well. Therefore, instead of using volumes that correspond to more than one pore volume, the present invention makes it possible to efficiently inject and spread the surfactant in the subterranean formation in a minimum necessary amount of aqueous medium.

### BRIEF DESCRIPTION OF THE DRAWINGS

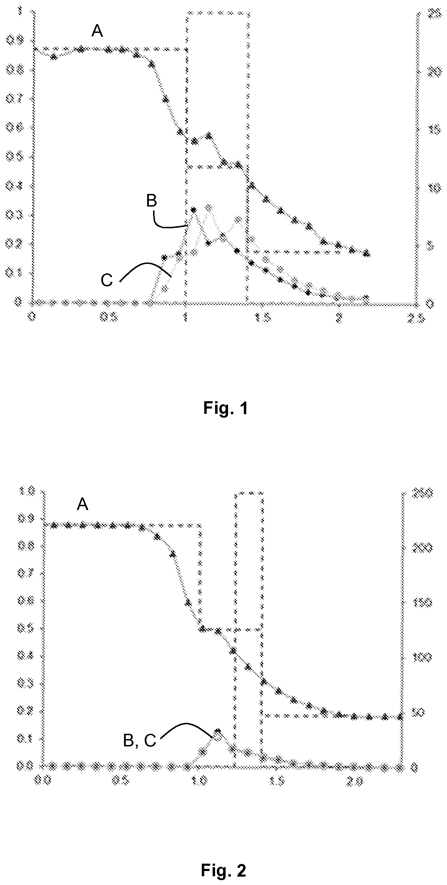

**Figure 1** shows the salinity (A) as well as the concentration in surfactant (B) and surfactant (C) in a porous medium as a function of pore volumes. The salinity (C) can be read on the right side of Y-axis (refractive index), the normalized concentration of surfactant (B) and surfactant (C) can be read on the left side of the Y-axis. The pore volumes can be read on the X-axis.
**Figure 2****,** shows the salinity (A) as well as the concentration in surfactant (B) and surfactant (C) in a porous medium as a function of pore volumes. The salinity (C) can be read on the right side of Y-axis (refractive index), the normalized concentration of surfactant (B) and surfactant (C) can be read on the left side of the Y-axis. The pore volumes can be read on the X-axis.

### DESCRIPTION OF EMBODIMENTS

The invention will now be described in more detail without limitation in the following description.

### First, second and third solutions

The present invention relates to the successive injection of three different solutions into a subterranean formation.

According to some embodiments, at least one, preferably at least two and more preferably all of the first solution, the second solution and the third solution are aqueous solutions. In this case, the aqueous solution may comprise an aqueous medium which is or derives from produced water, fresh water, sea water or aquifer water.

The first, second and third solutions may be aqueous solutions that comprise the same or a different aqueous medium.

The first solution has a salinity which is lower than the salinity of the formation water present in the subterranean formation, as will be detailed below.

Thus, the first solution may have a salinity lower than 200 g/L. According to some embodiments, the first solution may have a salinity from 25 to 200 g/L, and preferably from 40 to 150 g/L. For example, the first solution may have a salinity from 25 to 30 g/L; or from 30 to 35 g/L; or from 35 to 40 g/L; or from 40 to 45 g/L; or from 45 to 50 g/L; or from 50 to 55 g/L; or from 55 to 60 g/L; or from 60 to 65 g/L; or from 65 to 70 g/L; or from 70 to 75 g/L; or from 75 to 80 g/L; or from 80 to 85 g/L; or from 85 to 90 g/L; or from 90 to 95 g/L; or from 95 to 100 g/L; or from 100 to 105 g/L; or from 105 to 110 g/L; or from 110 to 115 g/L; or from 115 to 120 g/L; or from 120 to 125 g/L; or from 125 to 130 g/L; or from 130 to 135 g/L; or from 135 to 140 g/L; or from 140 to 145 g/L; or from 145 to 150 g/L; or from 150 to 155 g/L; or from 155 to 160 g/L; or from 160 to 165 g/L; or from 165 to 170 g/L; or from 170 to 175 g/L, or from 175 to 180 g/L; or from 180 to 185 g/L; or from 185 to 190 g/L; or from 190 to 195 g/L; or from 195 to 200 g/L. Salinity is defined herein as the total concentration of dissolved inorganic salts in water, including e.g. NaCl, CaCl₂, MgCl₂ and any other inorganic salts.

As mentioned above, the second solution has a salinity which is substantially the same as the salinity of the first solution.

By *"substantially the same"* is generally meant in the present disclosure equal ±10%, preferably ±5%, more preferably ±2%, and most preferably exactly equal.

On the contrary, the third solution has a salinity which is lower than the salinity of the first solution and thus lower than the salinity of the second solution. This salinity may be from 0.4 to 70 g/L. For example, this salinity may be from 0.4 to 1 g/L; or from 1 to 5 g/L; or from 5 to 10 g/L; or from 10 to 15 g/L; or from 15 to 20 g/L; or from 20 to 25 g/L; or from 25 to 30 g/L; or from 30 to 35 g/L; or from 35 to 40 g/L; or from 40 to 45 g/L; or from 45 to 50 g/L; or from 50 to 55 g/L; or from 55 to 60 g/L; or from 60 to 65 g/L; or from 65 to 70 g/L.

The salinity of the third solution may be lower than the salinity of the first and second solutions by at least 10 g/L, preferably by at least 20 g/L; preferably by at least 30 g/L; preferably by at least 40 g/L; preferably by at least 50 g/L; preferably by at least 60 g/L; and even more preferably by at least 70 g/L

The first solution comprises a polymer. This polymer may be chosen from hydrolyzed polyacrylamide, partially hydrolyzed polyacrylamide, sulfonated polyacrylamide, poly-N,N-dimethylacrylamide, polyvinyl pyrrolidone, poly(vinylamines), poly(2-acrylamido-2-methyl-1-propanesulfonic acid), biopolymers such as scleroglucans and xanthan gum, hydrophobically-modified associative polymers, co-polymers of polyacrylamide, 2-acrylamido 2-methylpropane sulfonic acid, and N-vinyl pyrrolidone. Preferably, this polymer may be partially hydrolyzed polyacrylamide or sulfonated polyacrylamide. Combinations of the above polymers may also be used in the first solution.

The polymer may be present in the first solution at a concentration from 100 to 5,000 ppm, and preferably from 500 to 4,000 ppm by weight relative to the total weight of the first solution. For example, this concentration may be from 100 to 500 ppm; or from 500 to 1,000 ppm; or from 1,000 to 1,500 ppm; or from 1,500 to 2,000 ppm; or from 2,000 to 2,500 ppm; or from 2,500 to 3,000 ppm; or from 3,000 to 3,500 ppm; or from 3,500 to 4,000 ppm; or from 4,000 to 4,500 ppm; or from 4,500 to 5,000 ppm by weight relative to the total weight of the first solution. The presence of the polymer makes it possible to viscosity the solutions and therefore increase sweep efficiency in the subterranean formation, as the viscosified solution can sweep areas that cannot be swept with aqueous solutions devoid of polymer.

The first solution may preferably be substantially devoid, or devoid, of a surfactant.

The first solution may preferably be substantially devoid, and more preferably devoid of an alkali agent such as sodium carbonate, sodium metaborate or sodium hydroxide or ammonia.

By *"substantially devoid"* is generally meant in the present disclosure present in the solution at an amount (by weight) lower than 1,000 ppm, preferably lower than 100 ppm, preferably lower than 10 ppm (by weight).

The first solution may have a viscosity from 1 to 100 cP. For example, the first solution may have a viscosity from 1 to 10 cP; or from 10 to 20 cP; or from 20 to 30 cP; or from 30 to 40 cP; or from 40 to 50 cP; or from 50 to 60 cP; or from 60 to 70 cP; or from 70 to 80 cP; or from 80 to 90 cP; or from 90 to 100 cP. The viscosity is measured with a rheometer or with a capillary. The viscosity is measured according to section 3.3.2 (when a rheometer is used) or section 3.3.4 (when a capillary is used) of *"API recommended practice* 63 *(RP 63)"* (Recommended practices for evaluation of polymers used in enhanced oil recovery operations).

The second solution comprises a polymer and at least one surfactant.

This polymer may be chosen from the group of polymers listed above.

According to some embodiments, the polymer in the second solution is the same as the polymer in the third solution.

According to other embodiments, the polymer in the second solution may be different from the polymer in the first solution.

The polymer may be present in the second solution at a concentration from 100 to 5,000 ppm, and preferably from 500 to 4,000 ppm by weight relative to the total weight of the second solution. For example, this concentration may be from 100 to 500 ppm; or from 500 to 1,000 ppm; or from 1,000 to 1,500 ppm; or from 1,500 to 2,000 ppm; or from 2,000 to 2,500 ppm; or from 2,500 to 3,000 ppm; or from 3,000 to 3,500 ppm; or from 3,500 to 4,000 ppm; or from 4,000 to 4,500 ppm; or from 4,500 to 5,000 ppm by weight relative to the total weight of the second solution.

According to some embodiments, the concentration of the polymer in the second solution is substantially the same as the concentration of the polymer in the first solution.

Alternatively, the concentration of the polymer in the second solution may be slightly higher than the concentration of the polymer in the first solution. By *"slightly higher"* is meant that the concentration of the polymer in the second solution is higher than the concentration of the polymer in the first solution by less than 500 ppm, preferably by less than 100 ppm by weight.

As mentioned above, the second solution comprises at least one surfactant. More preferably, the second solution comprises more than one surfactants, preferably two surfactants. Alternatively, more than two, for example three, or four, or five or more than five surfactants can be present in the second solution.

The surfactant may be or comprise for example an alkyl betain compound of formula (I):

(I) R¹-N⁺(R²) R²'-CH₂COO⁻

R¹ may be chosen from an alkyl or an alkenyl group having from 1 to 24 carbon atoms, preferably from 8 to 16, and more preferably from 10 to 14 carbon atoms.
R² and R²' may independently be chosen from an alkyl group having from 1 to 10 carbon atoms. Preferably, R² are methyl groups.

Alternatively, the surfactant may be or comprise for example a N-oxide compound of formula (II):

(II) R¹-N⁺(R²) R²'-O⁻

R¹, R² and R²' may be as described above.

Alternatively, the surfactant may be or comprise for example an amphoteric compound of formula (III):

(III) R³-N(R⁴)-R⁵

R³ may be chosen from an alkyl or alkenyl group having from 1 to 24 carbon atoms, preferably 8 to 16, and even more preferably from 10 to 14 carbon atoms.

Alternatively, R³ may be chosen from a group R⁶CO-, wherein R⁶ may preferably be a linear alkyl or alkenyl group having from 7 to 15, preferably from 9 to 13 carbon atoms, or from a group R⁶CO-NH-R⁷-, wherein R⁶ may be as defined above, and R⁷ may be an alkylene group having from 1 to 4 carbon atoms, preferably 2 carbon atoms. Preferably R⁷ may be a 1,2-ethylene group (-CH₂-CH₂-).

R⁴ and R⁵ may independently be chosen from an ω-carboxyalkyl group having the formula -(CH₂)ₙ-COO⁻M⁺, wherein M⁺ may be a hydrogen atom or a cation, preferably chosen from Li⁺, Na⁺ or K⁺, and n may be a number from 1 to 10, preferably 1 to 4, and most preferably 2, or from an ω-hydroxyalkyl group having the formula -(CH₂)ₙ-OH, wherein n may be as described above, or from a group having the formula -(CH₂CH₂-R⁸)ₘ-R⁹-COO⁻M⁺ wherein M⁺ may be as described above, m may be a number from 1 to 10, preferably 1 to 4, and most preferably 1, R⁸ may be selected from -O- and -NH- and R⁹ may be an alkylene group having 1 to 4, preferably 1 or 2 carbon atoms, more preferably a methylene group (-CH₂-).

Alternatively, the surfactant may be or comprise for example a compound of formula (IV):

(IV) [R¹⁰-N(R¹¹)(R¹²)-R¹³]⁺A⁻

R¹⁰, R¹¹, R¹² and R¹³ may be independently chosen from an alkyl radical having from 1 to 20 carbon atoms, preferably from 1 to 15 carbon atoms. R¹⁰, R¹¹, R¹² and R¹³ may be linear or branched alkyl radicals.
A- may be a halogen anion. A- may be chosen from F-, Cl-, Brand I⁻.

Alternatively, the surfactant may be or comprise for example a compound of formula (V):

(V) R¹⁴-(OCH₂CH₂)ₚ-X⁻M⁺

R¹⁴ may be a linear or branched alkyl group having from 1 to 24 carbon atoms and preferably from 10 to 18 carbon atoms.
p may be a rational number from 1 to 30, preferably from 1 to 20 and even more preferably from 1 to 10.
X⁻ may be an anionic group selected from the group of -OSO₃-, -R¹⁵-SO₃-, -SO₃-, or -R¹⁵-COO-.
R¹⁵ may be an alkylene group having from 1 to 10 carbon atoms.
M⁺ may be as described above.

Alternatively, the surfactant may be or comprise for example a compound of formula (VI):

(VI) R¹⁴-O-(CH₂-CH(CH₃)-O)ₖ-(CH₂CH₂O)ₚ-H

R¹⁴ and p may be as described above.
k may be a rational number from 0 to 30, preferably from 0 to 20 and even more preferably from 0 to 10.

Alternatively, the surfactant may be or comprise for example a compound of formula (VII):

(VII) R¹⁴-O-(CH₂-CH(CH₃)-O)ₓ-(CH₂-CH₂-O)_{y}-(CH₂)_{w}-X⁻M⁺

R¹⁴ may be as described above.
x may be a number from 0 to 24, and preferably from 0 to 10.
y may be a number from 0 to 24, and preferably from 2 to 15.
w may be a number from 0 to 2, preferably 2.
X⁻ and M⁺ may be as described above while X⁻ may preferably be SO₃- and M⁺ may preferably be selected from Li⁺, Na⁺ or K⁺.

Alternatively, the surfactant may be or comprise for example a compound of formula (VIII): 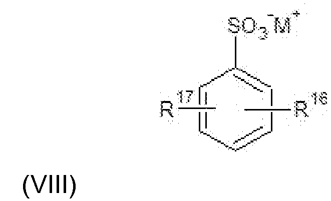 R¹⁶ and R¹⁷ may be independently chosen from a hydrogen atom, or an alkyl radical having from 1 to 24 carbon atoms, preferably from 5 to 15 and more preferably from 8 to 13 carbon atoms. R¹⁶ and R¹⁷ may be linear or branched alkyl radicals.

Alternatively, the surfactant may be or comprise for example a compound of formula (IX):

(IX) R¹⁸-(G)ₒ-O-R¹⁹

R¹⁸ may be a hydrogen atom or a linear or a branched alkyl radical having from 1 to 15 carbon atoms and preferably from 1 to 10 carbon atoms.
R¹⁹ may be a hydrogen atom or a linear or a branched alkyl radical having from 6 to 22 carbon atoms, preferably from 8 to 20, and even more preferably from 8 to 16 carbon atoms.
G may be a glucoside. Glucoside is a glycoside derived from glucose. Therefore, G has the molecular formula C₆H₁₀O₅ and is a six-membered ring.
o may be a number from 1 to 10, preferably from 1 to 5, and more preferably from 1 to 3.

Alternatively, the surfactant may be or comprise for example a compound of formula (X):

(X) R¹⁸-(G)ₒ-(R¹⁹-COO⁻M⁺)_{q}

R¹⁸, G, o and M may be as described above.
R¹⁹ may be a divalent hydrocarbon group comprising from 1 to 10 carbon atoms, or a divalent ester group -C(O)-O-R²⁰-, wherein R²⁰ may be a hydrocarbon group comprising 1 to 10 carbon atoms.
q may be a number from 1 to 4, and preferably from 1 to 2.

Alternatively, the surfactant may be or comprise for example a compound of formula (XI):

(XI) R¹⁵OSO₃⁻M⁺

R¹⁵ and M⁺ are as described above.

According to preferred embodiments, the at least one surfactant may be of formula (VII) or formula (VIII). In case more than one surfactants are present in the second solution, it is preferable that these surfactants should be of formula (VII) and/or formula (VIII). The combination of a surfactant of formula (VII) with a surfactant of formula (VIII) is preferable for the present invention.

The surfactant(s) may have a total concentration in the second solution from 0.001 to 10 %, preferably from 0.05 to 5 %, and more preferably from 0.05 to 1.5 % by weight of the total weight of the second solution. For example, the surfactant(s) may have a total concentration in the mixture from 0.001 to 0.01 %; or from 0.01 to 1 %; or from 1 to 2 %; or from 2 to 4 %; or from 4 to 6 %; or from 6 to 8 %; or from 8 to 10 % by weight of the total weight of the second solution.

The second solution may preferably be substantially devoid, and more preferably devoid of an alkali agent such as sodium carbonate, sodium metaborate or sodium hydroxide or ammonia.

The second solution may have a viscosity from 1 to 100 cP. For example, the first solution may have a viscosity from 1 to 10 cP; or from 10 to 20 cP; or from 20 to 30 cP; or from 30 to 40 cP; or from 40 to 50 cP; or from 50 to 60 cP; or from 60 to 70 cP; or from 70 to 80 cP; or from 80 to 90 cP; or from 90 to 100 cP. The viscosity is measured with a rheometer or with a capillary. The viscosity is measured according to section 3.3.2 (when a rheometer is used) or section 3.3.4 (when a capillary is used) of *"API recommended practice* 63 *(RP 63)"* (Recommended practices for evaluation of polymers used in enhanced oil recovery operations).

According to some preferred embodiments, the viscosity of the second solution may be substantially the same as the viscosity of the first solution.

Alternatively, the viscosity of the second solution may be slightly higher than the viscosity of the first solution. By *"slightly higher"* is meant that the viscosity of the second solution is higher than the viscosity of the first solution by less than 50 cP.

The third solution comprises a polymer.

This polymer may be chosen from the group of polymers listed above.

According to some embodiments, the polymer in the third solution is the same as the polymer in the first and/or second solutions.

According to other embodiments, the polymer in the third solution is different from the polymer in the first and/or second solutions.

The polymer may be present in the third solution at a concentration from 500 to 5,500 ppm, and preferably from 2,000 to 4,500 ppm by weight relative to the total weight of the third solution. For example, this concentration may be from 500 to 1,000 ppm; or from 1,000 to 1,500 ppm; or from 1,500 to 2,000 ppm; or from 2,000 to 2,500 ppm; or from 2,500 to 3,000 ppm; or from 3,000 to 3,500 ppm; or from 3,500 to 4,000 ppm; or from 4,000 to 4,500 ppm; or from 4,500 to 5,000 ppm; or from 5,000 to 5,500 ppm by weight relative to the total weight of the third solution.

According to some embodiments, the concentration of the polymer in the third solution is substantially the same (preferably the same) as the concentration of the polymer in the first solution and/or the concentration of the polymer in the second solution.

According to other embodiments, the concentration of the polymer in the third solution is higher than the concentration of the polymer in the first solution and/or the concentration of the polymer in the second solution.

According to other embodiments, the concentration of the polymer in the third solution is lower than the concentration of the polymer in the first solution and/or the concentration of the polymer in the second solution.

In fact, the polymer concentration in each solution is selected in order to achieve a specific solution viscosity. As the viscosity depends on the salinity of the solution, more particularly the lower the salinity of the solution the higher its viscosity for a specific polymer concentration, the amount of polymer needed in the third solution may be lower than the amount of polymer needed in the first and second solutions (as the third solution has a lower salinity than the salinity of the first and second solutions).

The third solution may preferably be substantially devoid (more preferably devoid) of surfactant.

The third solution may preferably be substantially devoid, and more preferably devoid of an alkali agent such as sodium carbonate, sodium metaborate or sodium hydroxide or ammonia.

The third solution may have a viscosity from 1 to 100 cP. For example, the first solution may have a viscosity from 1 to 10 cP; or from 10 to 20 cP; or from 20 to 30 cP; or from 30 to 40 cP; or from 40 to 50 cP; or from 50 to 60 cP; or from 60 to 70 cP; or from 70 to 80 cP; or from 80 to 90 cP; or from 90 to 100 cP. The viscosity is measured with a rheometer or with a capillary. The viscosity is measured according to section 3.3.2 (when a rheometer is used) or section 3.3.4 (when a capillary is used) of *"API recommended practice* 63 *(RP 63)"* (Recommended practices for evaluation of polymers used in enhanced oil recovery operations).

The viscosity of the third solution may preferably be higher than the viscosity of the first solution and the viscosity of the second solution. For example, the viscosity of the third solution may be higher than the viscosity of the first solution and the second solution by a factor from 1 to 95 cP. In case the viscosity of the second solution is slightly higher than the viscosity of the first solution, the viscosity of the third solution should be higher by a factor from 1 to 95 cP relative to the viscosity of the second solution.

Alternatively, the viscosity of the third solution may substantially the same (e.g. the same) as the viscosity of the first solution and the viscosity of the second solution. In case the second solution has a viscosity which is slightly higher than the viscosity of the first solution, the viscosity of the third solution may be substantially the same (e.g. the same) as the viscosity of the second solution.

The first, second and third solutions may independently comprise one or more additives. Such additives may include additional surfactants, salts, sacrificial agents, mobility control polymers, pH adjustment agents, solvents and mixtures thereof. The additives may be present at a content e.g. from 0.001 to 10 % by weight of the total weight of the solution (first, second, or third).

The first, second and third solutions may also independently comprise divalent ions such as calcium and/or magnesium, mostly in the form of bicarbonates, sulfates and chlorides. Thus, the first, second and third solution may independently comprise from 0.1 to 50 % (eq./L), and preferably from 10 to 40 % (eq./L), and more preferably from 20 to 30 % (eq./L) of divalent ions in the form of bicarbonates, sulfates and chlorides. By « % *(eq.*/*L)* » is meant the ratio of the sum of equivalent concentrations of divalent cations to the sum of equivalent concentrations of all cations.

### Method for extracting hydrocarbons

The present invention relates to a method for extracting hydrocarbons from a subterranean formation. The subterranean formation may in particular be a carbonated reservoir.

Preferably, the subterranean formation is a high-salinity reservoir. This means that the salinity of the subterranean formation, in other words the salinity of the formation water in the reservoir, is equal to or higher than 200 g/L, preferably equal to or higher than 220 g/L, and more preferably equal to or higher than 220 g/L. For example, this salinity may be from 200 to 210 g/L; or from 210 to 220 g/L; or from 220 to 230 g/L; or from 230 to 240 g/L; or from 240 to 250 g/L; or from 250 to 260 g/L; or even higher than 260 g/L.

The temperature within the subterranean formation may range from 25 to 140°C, preferably from 80 to 140°C and more preferably from 100 to 120°C.

The permeability of at least a portion of the subterranean formation may range from 1 to 2000 md, preferably from 1 to 1000 md and more preferably from 1 to 1000 md, as estimated by well log, laboratory measurements or well test. 1 md equals to 9.87 x 10⁻¹⁶ m².

The hydrocarbons in the subterranean formation may preferably have a viscosity at 25°C from 0.2 to 250 cP, preferably from 0.3 to 220 cP, and more preferably from 0.4 to 200 cP. For example, this viscosity may be from 0.2 to 0.5 cP; or from 0.5 to 1 cP; or from 1 to 5 cP; or from 5 to 10 cP; or from 10 to 25 cP; or from 25 to 50 cP; or from 50 to 100 cP; or from 100 to 150 cP; or from 150 to 200 cP; or from 200 to 250 cP. The viscosity is measured with a Stabinger densimeter/viscometer.

The method according to the invention comprises a first step of injecting a volume of the first solution described above into the subterranean formation. As the salinity of the first solution is lower than the salinity of the subterranean formation, the injection of the first solution makes it possible to adjust and reduce the salinity of the reservoir. Moreover, as mentioned above, the presence of polymer in the first solution makes it possible to increase its viscosity in order to increase the sweep efficiency in the reservoir. Otherwise, certain areas could remain unswept and therefore of high salinity. As the surfactant can be retained in high salinity reservoirs, the absence of surfactant at this stage makes it possible to reduce the operation costs.

The method according to the invention further comprises a subsequent step of injecting a volume of the second solution described above into the subterranean formation. The salinity of the second solution (and correspondingly the salinity of the first solution) may preferably correspond to the optimal salinity of the surfactant, in other words to the salinity at which the interfacial tension between the hydrocarbons and the aqueous phase is minimum and the surfactant is most effectively. As the surfactant present in the second solution comes into contact with the reservoir having a decreased salinity compared to its initial salinity, the formation of viscous emulsions, thus the retention of the surfactant(s) as well as the separation of the surfactants when more than one surfactants are used, can be avoided. More particularly, not only does the surfactant come into contact with an aqueous medium of low salinity but also the salinity of the aqueous medium is (substantially) the same as the salinity of the second solution (of optimal salinity). This makes it possible to remain at an optimal salinity so that the efficiency of the surfactant is not affected. In addition, as the second solution has the same viscosity as (or a slightly higher viscosity than) the first solution, this allows for the second solution to sweep all the areas in the reservoir having been swept by the first solution.

The method according to the invention further comprises a subsequent step of injecting a volume of the third solution described above into the subterranean formation. The injection of the third solution makes it possible to spread the surfactant in the subterranean formation from the injection well to the production well without using large quantities of surfactants. More particularly, an amount of the surfactant present in the reservoir after the injection of the second solution can remain trapped in the formation. The fact that the third solution has a salinity which is lower than the salinity of the first and second solutions makes it possible to transfer the surfactant from the oil to the aqueous phase in order to continue sweeping of the subterranean formation. This lower salinity also makes it possible to increase the solubility of the surfactant in the aqueous medium and also reduce its adsorption on the subterranean formation. In addition, due to the complexity of each reservoir, the optimal salinity may not be maintained during the whole "journey" of the surfactant solution in the reservoir. Thus, the third solution of lower salinity makes it possible to achieve low interfacial tensions, in other words ensure an optimal salinity, all along the reservoir. The efficiency of the process is thus increased without using excessive amounts of surfactants. Again, as the third solution has a higher viscosity than (or the same viscosity as) the first and second solutions, this allows for the third solution to sweep all the areas in the reservoir having been swept by the first and second solutions.

The injection of the above solutions may be performed at a pressure of from 70 to 300 bar, preferably from 100 to 250 bar.

According to some embodiments, the sum of the injected volumes of the first, second and third solutions from 0.5 to 3 pore volumes (PV), preferably from 0.7 to 2 PV, more preferably from 0.9 to 1.5 PV, and most preferably is substantially equal to 1 PV. By *"pore volume"* is meant the swept volume between an injection well and a production well. The pore volume between an injection well and a production well may be readily determined by methods known to the person skilled in the art. Such methods include modelling studies. However, the pore volume may also be determined by passing water having a tracer contained therein through the reservoir from the injection well to the production well. The swept volume is the volume swept by the injection fluid averaged over all flow paths between the injection well and production well. This may be determined with reference to the first temporal moment of the tracer distribution in the produced water, as would be well known to the person skilled in the art.

In addition, according to some embodiments, the sum of the injected volume of the first solution and the injected volume of the second solution may be equal to or less than the injected volume of the third solution. For example, the sum of the injected volume of the first solution and the injected volume of the second solution may be from 0.2 to 0.5 PV, preferably approximately 0.4 PV, and the injected volume of the third solution may from 0.5 to 1 PV, preferably approximately 0.6 PV.

According to some embodiments, the injected volume of the first solution may correspond to from 0.1 to 0.4 PV, and preferably from 0.15 to 0.25 PV.

According to some embodiments, the injected volume of the second solution may correspond to from 0.1 to 0.4 PV, and preferably from 0.1 to 0.2 PV.

According to some embodiments, the injected volume of the third solution may correspond to from 0.2 to 0.8 PV, and preferably from 0.4 to 0.6 PV.

The method according to the invention also comprises a step of collecting hydrocarbons displaced by the injected solutions.

The injection of the above solutions is carried out *via* one or more injection wells.

The collection of hydrocarbons is carried out *via* one or more production wells.

The method according to the invention may preferably be implemented in a continuous manner, *i.e.* the first, second and third solutions are successively injected into the subterranean formation, for a period of time of at least 1 day, or at least 1 week, or at least 1 month, or at least 2 months, or at least 3 months, or at least 4 months, or at least 6 months, or at least 1 year.

### EXAMPLES

The following examples illustrate the invention without limiting it.

Both experiments were conducted in a system simulating a subterranean formation of carbonate type. The reservoir has a temperature of 83°C and the formation water in the reservoir has a salinity of 230 g/L and a concentration in divalent cations of 28 % (eq/L).

The oil used for these experiments is has a density of 0.81 g/cm³ at 83°C, and a density of 0.86 g/cm³ at 25°C, comprises 8 % by weight of toluene and has a viscosity of 1.7 cP at 83°C.

### Example 1-Comparative example

An aqueous solution having a salinity of 114 g/L and comprising 1 wt.% of a surfactant (B) C₁₆₋₁₈O(CH₂CH₂O)₁₀(CH₂)₂SO₃Na, 0.25 wt.% of a surfactant (C) C₁₀₋₁₃-benzene-SO₃Na, and 3,000 ppm (wt.) of terpolymer containing N-Vinyl-Pyrrolidone (SAV10 (SNF Floerger)) was injected into the system simulating the subterranean formation at a volume corresponding to 0.4 PV. Then, an aqueous solution having a salinity of 40 g/L and comprising the same polymer at a concentration of 3,900 ppm and divalent ions at a concentration of 23 % (eq/L) was injected to into the system simulating the subterranean formation at a volume corresponding to from 2.2 to 2.8 PV. Although in an actual subterranean formation, the total volume of solutions injected into the subterranean formation may desirably be approximately 1 PV, in the case of these simulations a higher volume was injected.

This method made it possible to increase the recovery of hydrocarbons by 23 %. However, 0.45 mg of surfactant ((B) and (C)) per gram of rock (formation), was retained.

Furthermore, as shown in **figure** 1, a separation of the two surfactants occurred in the reservoir at approx. 1 to 1.5 PV, which reduced efficiency of surfactant(s) and their recovery.

### Example 2-Example according to the invention

A first aqueous solution having a salinity of 115 g/L and comprising 3,000 ppm (wt.) of terpolymer containing N-Vinyl-Pyrrolidone (SAV10 (SNF Floerger)) was injected into the system simulating the subterranean formation at a volume corresponding to 0.23 PV.

A second aqueous solution having a salinity of 114 g/L and comprising 1 wt.% of a surfactant (B) C₁₆₋₁₈O(CH₂CH₂O)₁₀(CH₂)₂SO₃Na, 0.25 % of a surfactant (C) C₁₀₋₁₃-benzene-SO₃Na, and 3,000 ppm of the same polymer was injected into the system simulating the subterranean formation at a volume corresponding to 0.17 PV.

Then, a third aqueous solution having a salinity of 40 g/L and comprising the same polymer at a concentration of 3,900 ppm and divalent ions at a concentration of 23 % (eq/L) was injected into the system simulating the subterranean formation at a volume corresponding to from 2.2 to 2.8 PV. Although in an actual subterranean formation the total volume of solutions injected into the subterranean formation may desirably be approx. 1 PV, in the case of these simulations a higher volume was injected.

This method made it possible to increase the recovery of hydrocarbons by 25 %. The retention of surfactants was reduced to 0.27 mg per gram of rock.

Furthermore, as shown in **figure 2****,** when a first solution comprising a polymer is injected prior to the solution comprising the surfactants and a polymer, the separation of the two surfactants does not occur. This makes it possible to maintain the efficiency of the surfactants and improve their recovery.

## Claims

1. A method for extracting hydrocarbons from a subterranean formation, comprising:
- injecting a volume of a first solution comprising polymer into the subterranean formation, the first solution having a salinity which is lower than the salinity of water in the subterranean formation;
- injecting a volume of a second solution comprising at least one surfactant and polymer into the subterranean formation, the second solution having substantially the same salinity as the first solution;
- injecting a volume of a third solution comprising polymer into the subterranean formation, the third solution having a salinity which is lower than the salinity of the first and the second solutions;
- collecting hydrocarbons displaced by the injected solutions.

2. The method of claim 1, wherein the polymer of each of the first, second and third solutions is chosen from hydrolyzed polyacrylamide, partially hydrolyzed polyacrylamide, sulfonated polyacrylamide, poly-N,N-dimethylacrylamide, polyvinyl pyrrolidone, poly(vinylamines), poly(2-acrylamido-2-methyl-1 -propanesulfonic acid), biopolymers such as scleroglucans and xanthan gum, hydrophobically-modified associative polymers, co-polymers of polyacrylamide, 2-acrylamido 2-methylpropane sulfonic acid, and N-vinyl pyrrolidone, and preferably is chosen from partially hydrolyzed polyacrylamide and sulfonated polyacrylamide.

3. The method according to any one of claims 1 to 2, wherein the water in the subterranean formation has a salinity equal to or higher than 200 g/L, preferably equal to or higher than 210 g/L, and more preferably equal to or higher than 220 g/L.

4. The method according to any one of claims 1 to 3, wherein the first solution and the second solution have a salinity from 25 to 200 g/L, and preferably from 40 to 150 g/L; and/or wherein the third solution has a salinity from 0.4 to 70 g/L.

5. The method according to any one of claims 1 to 4, wherein the salinity of the third solution is lower than the salinity of the first and second solutions by at least 10 g/L, preferably by at least 20 g/L; preferably by at least 30 g/L; preferably by at least 40 g/L; preferably by at least 50 g/L; preferably by at least 60 g/L; and even more preferably by at least 70 g/L.

6. The method according to any one of claims 1 to 5, wherein the first solution has a viscosity from 1 to 100 cP; and/or wherein the second solution has a viscosity from 1 to 100 cP; and/or wherein the third solution has a viscosity from 1 to 100 cP.

7. The method according to any one of claims 1 to 6, wherein the first solution has a viscosity which is substantially the same as the viscosity of the second solution; and/or wherein the third solution has a viscosity which is equal to or higher than the viscosity of the first solution and equal to or higher than the viscosity of the second solution.

8. The method according to any one of claims 1 to 7, wherein the at least one surfactant has a concentration in the second solution from 0.001 to 10 %, preferably from 0.05 to 5 %, and more preferably from 0.05 to 1.5 % by weight of the total weight of the second solution.

9. The method according to any one of claims 1 to 8, wherein the at least one surfactant is chosen from a surfactant of formula (VII):
(VII) R¹⁴-O-(CH₂-CH(CH₃)-O)ₓ-(CH₂-CH₂-O)_{y}-(CH₂)_{w}-X⁻M⁺
wherein:
- R¹⁴ is a linear or branched alkyl group having from 1 to 24 carbon atoms and preferably from 10 to 18 carbon atoms;
- x is a number from 0 to 24, and preferably from 0 to 10;
- y is a number from 0 to 24, and preferably from 2 to 15;
- w is a number from 0 to 2, preferably 2;
- X⁻ is an anionic group selected from the group of -OSO₃-, -R¹⁵-SO₃-, -SO₃-, or -R¹⁵-COO- wherein R¹⁵ is an alkylene group having from 1 to 10 carbon atoms; preferably X⁻ is SO₃-; and
- M⁺ is a hydrogen atom or a cation, preferably chosen from Li⁺, Na+ or K⁺;
and a surfactant of formula (VIII): 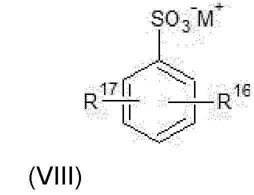
- R¹⁶ and R¹⁷ independently chosen from a hydrogen atom, or a linear or branched alkyl group having radical having from 1 to 24 carbon atoms;
- M⁺ is a hydrogen atom or a cation, preferably chosen from Li⁺, Na⁺ or K⁺;
as well as their mixtures.

10. The method according to any one of claims 1 to 9, wherein the second solution comprises two surfactants.

11. The method according to any one of claims 1 to 10, wherein each of the first, second and third solutions comprises an aqueous medium which is or derives from produced water, fresh water, sea water or aquifer water.

12. The method according to any one of claims 1 to 11, wherein the first solution and/or the second solution and/or the third solution are substantially devoid of alkali agents, and preferably wherein the first solution and the second solution and the third solution are substantially devoid of alkali agents.

13. The method according to any one of claims 1 to 12, wherein the subterranean formation has a pore volume, and wherein the sum of the injected volume of the first solution and the injected volume of the second solution and the injected volume of the third solution is equal to or less than the pore volume of the subterranean formation.

14. The method according to any one of claims 1 to 13, wherein the sum of the injected volume of the first solution and the injected volume of the second solution is equal to or lower than the injected volume of the third solution.

15. The method according to any one of claims 1 to 14, wherein the injection steps are carried out *via* at least one injection well, and the step of collecting hydrocarbons is carried out *via* at least one production well.

## Patentansprüche

1. Verfahren zum Gewinnen von Kohlenwasserstoffen aus einer unterirdischen Formation, umfassend:
- Einspritzen eines Volumens einer ersten Lösung, die Polymer umfasst, in die unterirdische Formation, wobei die erste Lösung einen Salzgehalt aufweist, der niedriger ist als der Salzgehalt des Wassers in der unterirdischen Formation;
- Einspritzen eines Volumens einer zweiten Lösung, die mindestens ein Tensid und Polymer umfasst, in die unterirdische Formation, wobei die zweite Lösung im Wesentlichen den gleichen Salzgehalt aufweist wie die erste Lösung;
- Einspritzen eines Volumens einer dritten Lösung, die Polymer umfasst, in die unterirdische Formation, wobei die dritte Lösung einen Salzgehalt aufweist, der niedriger ist als der Salzgehalt der ersten und der zweiten Lösung;
- Auffangen der von den eingespritzten Lösungen verdrängten Kohlenwasserstoffe.

2. Verfahren nach Anspruch 1, wobei das Polymer von jeder von der ersten, der zweiten und der dritten Lösung ausgewählt ist aus hydrolysiertem Polyacrylamid, teilweise hydrolysiertem Polyacrylamid, sulfoniertem Polyacrylamid, Poly-N,N-Dimethylacrylamid, Polyvinylpyrrolidon, Poly(vinylaminen), Poly(2-acrylamido-2-methyl-1-propansulfonsäure), Biopolymeren, wie beispielsweise Skleroglukanen und Xanthangummi, hydrophob modifizierten assoziativen Polymeren, Copolymeren von Polyacrylamid, 2-Acrylamido-2-methylpropansulfonsäure und N-Vinylpyrrolidon, und vorzugsweise ausgewählt ist aus teilweise hydrolysiertem Polyacrylamid und sulfoniertem Polyacrylamid.

3. Verfahren nach einem der Ansprüche 1 bis 2, wobei das Wasser in der unterirdischen Formation einen Salzgehalt gleich wie oder höher als 200 g/l, vorzugsweise gleich wie oder höher als 210 g/l und bevorzugter gleich wie oder höher als 220 g/l aufweist.

4. Verfahren nach einem der Ansprüche 1 bis 3, wobei die erste Lösung und die zweite Lösung einen Salzgehalt von 25 bis 200 g/l und vorzugsweise von 40 bis 150 g/l aufweisen; und/oder wobei die dritte Lösung einen Salzgehalt von 0,4 bis 70 g/l aufweist.

5. Verfahren nach einem der Ansprüche 1 bis 4, wobei der Salzgehalt der dritten Lösung um mindestens 10 g/l, vorzugsweise um mindestens 20 g/l, vorzugsweise um mindestens 30 g/l, vorzugsweise um mindestens 40 g/l, vorzugsweise um mindestens 50 g/l, vorzugsweise um mindestens 60 g/l und noch bevorzugter um mindestens 70 g/l niedriger ist als der Salzgehalt der ersten und der zweiten Lösung.

6. Verfahren nach einem der Ansprüche 1 bis 5, wobei die erste Lösung eine Viskosität von 1 bis 100 cP aufweist; und/oder wobei die zweite Lösung eine Viskosität von 1 bis 100 cP aufweist; und/oder wobei die dritte Lösung eine Viskosität von 1 bis 100 cP aufweist.

7. Verfahren nach einem der Ansprüche 1 bis 6, wobei die erste Lösung eine Viskosität aufweist, die im Wesentlichen gleich ist wie die Viskosität der zweiten Lösung; und/oder wobei die dritte Lösung eine Viskosität aufweist, die gleich wie oder höher als die Viskosität der ersten Lösung und gleich wie oder höher als die Viskosität der zweiten Lösung ist.

8. Verfahren nach einem der Ansprüche 1 bis 7, wobei das mindestens eine Tensid in der zweiten Lösung eine Konzentration von 0,001 bis 10 %, vorzugsweise von 0,05 bis 5 % und bevorzugter von 0,05 bis 1,5 Gewichts-%, bezogen auf das Gesamtgewicht der zweiten Lösung, aufweist.

9. Verfahren nach einem der Ansprüche 1 bis 8, wobei das mindestens eine Tensid ausgewählt ist aus einem Tensid von Formel (VII):
(VII) R¹⁴-O-(CH₂-CH(CH₃)-O)ₓ-(CH₂-CH₂-O)_{y}-(CH₂)_{w}-X⁻M⁺
wobei:
- R¹⁴ eine lineare oder verzweigte Alkylgruppe, die von 1 bis 24 Kohlenstoffatome, vorzugsweise von 10 bis 18 Kohlenstoffatome aufweist;
- x eine Zahl von 0 bis 24, vorzugsweise von 0 bis 10, ist;
- y eine Zahl von 0 bis 24, vorzugsweise von 2 bis 15, ist;
- w eine Zahl von 0 bis 2, vorzugsweise 2, ist;
- X⁻ eine anionische Gruppe ist, ausgewählt aus der Gruppe von -OSO₃-, -R¹⁵-SOs-, -SOs- oder -R¹⁵-COO-, wobei R¹⁵ eine Alkylengruppe, die von 1 bis 10 Kohlenstoffatome aufweist; vorzugsweise X⁻ SO₃⁻ ist; und
- M⁺ ein Wasserstoffatom oder ein Kation ist, vorzugsweise ausgewählt aus Li⁺, Na⁺ oder K⁺;
und ein Tensid von Formel (VIII): 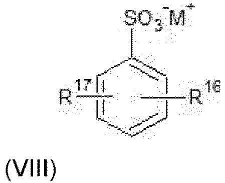
- R¹⁶ und R¹⁷ unabhängig ausgewählt sind aus einem Wasserstoffatom oder einer linearen oder verzweigten Alkylgruppe, die ein Radikal aufweist, das von 1 bis 24 Kohlenstoffatome aufweist;
- M⁺ ein Wasserstoffatom oder ein Kation ist, vorzugsweise ausgewählt aus Li⁺, Na⁺ oder K⁺;
- sowie deren Gemische.

10. Verfahren nach einem der Ansprüche 1 bis 9, wobei die zweite Lösung zwei Tenside umfasst.

11. Verfahren nach einem der Ansprüche 1 bis 10, wobei jede von der ersten, der zweiten und der dritten Lösung ein wässriges Medium umfasst, das Produktionswasser, Süßwasser, Meerwasser oder Grundwasser ist oder davon abgeleitet ist.

12. Verfahren nach einem der Ansprüche 1 bis 11, wobei die erste Lösung und/oder die zweite Lösung und/oder die dritte Lösung im Wesentlichen frei von Alkalien sind, und vorzugsweise wobei die erste Lösung und die zweite Lösung und die dritte Lösung im Wesentlichen frei von Alkalien sind.

13. Verfahren nach einem der Ansprüche 1 bis 12, wobei die unterirdische Formation ein Porenvolumen aufweist, und wobei die Summe des eingespritzten Volumens der ersten Lösung und des eingespritzten Volumens der zweiten Lösung und des eingespritzten Volumens der dritten Lösung gleich wie oder kleiner als das Porenvolumen der unterirdischen Formation ist.

14. Verfahren nach einem der Ansprüche 1 bis 13, wobei die Summe des eingespritzten Volumens der ersten Lösung und des eingespritzten Volumens der zweiten Lösung gleich wie oder geringer als das eingespritzte Volumen der dritten Lösung ist.

15. Verfahren nach einem der Ansprüche 1 bis 14, wobei die Injektionsschritte über mindestens eine Injektionsbohrung und der Schritt des Auffangens von Kohlenwasserstoffen über mindestens eine Produktionsbohrung durchgeführt werden.

## Revendications

1. Procédé d'extraction d'hydrocarbures à partir d'une formation souterraine, comprenant :
- l'injection d'un volume d'une première solution comprenant un polymère dans la formation souterraine, la première solution ayant une salinité qui est inférieure à la salinité de l'eau dans la formation souterraine ;
- l'injection d'un volume d'une deuxième solution comprenant au moins un tensioactif et un polymère dans la formation souterraine, la deuxième solution ayant sensiblement la même salinité que la première solution ;
- l'injection d'un volume d'une troisième solution comprenant un polymère dans la formation souterraine, la troisième solution ayant une salinité qui est inférieure à la salinité des première et deuxième solutions ;
- la collecte des hydrocarbures déplacés par les solutions injectées.

2. Procédé selon la revendication 1, dans lequel le polymère de chacune des première, deuxième et troisième solutions est choisi parmi un polyacrylamide hydrolysé, un polyacrylamide partiellement hydrolysé, un polyacrylamide sulfoné, le poly-N,N-diméthylacrylamide, la polyvinylpyrrolidone, des poly(vinylamines), le poly(acide 2-acrylamido-2-méthyl-1-propanesulfonique), des biopolymères tels que des scléroglucanes et la gomme xanthane, des polymères associatifs modifiés de manière hydrophobe, des copolymères de polyacrylamide, l'acide 2-acrylamido 2-méthylpropane sulfonique et la N-vinylpyrrolidone, et est de préférence choisi parmi un polyacrylamide partiellement hydrolysé et un polyacrylamide sulfoné.

3. Procédé selon l'une quelconque des revendications 1 à 2, dans lequel l'eau dans la formation souterraine a une salinité égale ou supérieure à 200 g/l, de préférence égale ou supérieure à 210 g/l, et plus préférablement égale ou supérieure à 220 g/l.

4. Procédé selon l'une quelconque des revendications 1 à 3, dans lequel la première solution et la deuxième solution ont une salinité de 25 à 200 g/l, et de préférence de 40 à 150 g/l ; et/ou dans lequel la troisième solution a une salinité de 0,4 à 70 g/l.

5. Procédé selon l'une quelconque des revendications 1 à 4, dans lequel la salinité de la troisième solution est inférieure à la salinité des première et deuxième solutions d'au moins 10 g/l, de préférence d'au moins 20 g/l ; de préférence d'au moins 30 g/l ; de préférence d'au moins 40 g/l ; de préférence d'au moins 50 g/l ; de préférence d'au moins 60 g/l ; et encore plus préférablement d'au moins 70 g/l.

6. Procédé selon l'une quelconque des revendications 1 à 5, dans lequel la première solution a une viscosité de 1 à 100 cP ; et/ou dans lequel la deuxième solution a une viscosité de 1 à 100 cP ; et/ou dans lequel la troisième solution a une viscosité de 1 à 100 cP.

7. Procédé selon l'une quelconque des revendications 1 à 6, dans lequel la première solution a une viscosité qui est sensiblement la même que la viscosité de la deuxième solution ; et/ou dans lequel la troisième solution a une viscosité qui est égale ou supérieure à la viscosité de la première solution et égale ou supérieure à la viscosité de la deuxième solution.

8. Procédé selon l'une quelconque des revendications 1 à 7, dans lequel le ou les tensioactifs ont une concentration dans la deuxième solution de 0,001 à 10 %, de préférence de 0,05 à 5 %, et plus préférablement de 0,05 à 1,5 % en poids du poids total de la deuxième solution.

9. Procédé selon l'une quelconque des revendications 1 à 8, dans lequel le ou les tensioactifs sont choisis parmi un tensioactif de formule (VII) :
(VII) R¹⁴-O-(CH₂-CH(CH₃)-O)ₓ-(CH₂-CH₂-O)_{y}-(CH₂)_{w}-X⁻M⁺
dans laquelle :
- R¹⁴ est un groupe alkyle linéaire ou ramifié ayant de 1 à 24 atomes de carbone et de préférence de 10 à 18 atomes de carbone ;
- x est un nombre de 0 à 24, et de préférence de 0 à 10 ;
- y est un nombre de 0 à 24, et de préférence de 2 à 15 ;
- w est un nombre de 0 à 2, de préférence 2 ;
- X⁻ est un groupe anionique choisi dans le groupe de -OSO₃-, -R¹⁵-SO₃-, -SO₃-, ou -R¹⁵-COO-, R¹⁵ étant un groupe alkylène ayant de 1 à 10 atomes de carbone ; de préférence X⁻ est SO₃- ; et
- M⁺ est un atome d'hydrogène ou un cation, de préférence choisi parmi Li⁺, Na⁺ ou K⁺ ;
et un tensioactif de formule (VIII) : 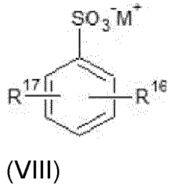
- R¹⁶ et R¹⁷ choisis indépendamment parmi un atome d'hydrogène, ou un groupe alkyle linéaire ou ramifié ayant un radical ayant de 1 à 24 atomes de carbone ;
- M⁺ est un atome d'hydrogène ou un cation, de préférence choisi parmi Li⁺, Na⁺ ou K⁺ ;
ainsi que leurs mélanges.

10. Procédé selon l'une quelconque des revendications 1 à 9, dans lequel la deuxième solution comprend deux tensioactifs.

11. Procédé selon l'une quelconque des revendications 1 à 10, dans lequel chacune des première, deuxième et troisième solutions comprend un milieu aqueux qui est ou dérive d'eau produite, d'eau douce, d'eau de mer ou d'eau d'aquifère.

12. Procédé selon l'une quelconque des revendications 1 à 11, dans lequel la première solution et/ou la deuxième solution et/ou la troisième solution sont sensiblement exemptes d'agents alcalins, et de préférence dans lequel la première solution et la deuxième solution et la troisième solution sont sensiblement exemptes d'agents alcalins.

13. Procédé selon l'une quelconque des revendications 1 à 12, dans lequel la formation souterraine a un volume poreux, et dans lequel la somme du volume injecté de la première solution et du volume injecté de la deuxième solution et du volume injecté de la troisième solution est égale ou inférieure au volume poreux de la formation souterraine.

14. Procédé selon l'une quelconque des revendications 1 à 13, dans lequel la somme du volume injecté de la première solution et du volume injecté de la deuxième solution est égale ou inférieure au volume injecté de la troisième solution.

15. Procédé selon l'une quelconque des revendications 1 à 14, dans lequel les étapes d'injection sont réalisées via au moins un puits d'injection, et l'étape de collecte d'hydrocarbures est réalisée via au moins un puits de production.
